**Europäisches Patentamt**

**European Patent Office**

**Office européen des brevets**

(19)

(11) Veröffentlichungsnummer: **0 415 273 B1**

(12) **EUROPÄISCHE PATENTSCHRIFT**

(45) Veröffentlichungstag der Patentschrift: **02.11.94**

(21) Anmeldenummer: **90116196.8**

(22) Anmeldetag: **24.08.90**

(51) Int. Cl.⁵: **C08G 12/32**

(54) **Verfahren zur Herstellung von kugelförmigen, harten mono- oder oligodispersen Teilchen aus Melaminharz.**

(30) Priorität: **01.09.89 DE 3929052**

(43) Veröffentlichungstag der Anmeldung:
**06.03.91 Patentblatt 91/10**

(45) Bekanntmachung des Hinweises auf die
Patenterteilung:
**02.11.94 Patentblatt 94/44**

(84) Benannte Vertragsstaaten:
**CH DE ES FR GB IT LI**

(56) Entgegenhaltungen:
**EP-A- 0 052 710**
**EP-A- 0 054 755**
**EP-A- 0 218 887**
**US-A- 4 183 832**

**Römpp, Chemie Lexikon, Seite 1844**

(73) Patentinhaber: **BASF Aktiengesellschaft**
**Carl-Bosch-Strasse 38**
**D-67063 Ludwigshafen (DE)**

(72) Erfinder: **Follmann, Heinrich**
**Allemannenstrasse 1**
**D-4950 Minden (DE)**
Erfinder: **Hoffmann, Dietrich**
**Am Hag 6**
**D-6701 Roedersheim-Gronau (DE)**
Erfinder: **Sliwka, Wolfgang, Dr.**
**Diemstrasse 8**
**D-6940 Weinheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Wäßrige monodisperse Dispersionen von Mikroteilchen, die aus Melamin-Formaldehyd-Harz bestehen, und deren Herstellung sind bekannt. Der Teilchendurchmesser liegt im Bereich von 0,8 bis etwa 15 $\mu$m.

Monodispers im Sinne der vorliegenden Erfindung bedeutet, daß die Teilchen eine sehr enge Verteilung im Durchmesser der Teilchen aufweisen.

Monodisperse Dispersionen werden z.B. in der medizinischen Diagnostik und als Eichpartikel für Geräte zur optischen und/oder elektronischen Bestimmung von Teilchengrößen und Teilchengrößenverteilungen verwendet.

Aus der EP-A-0 218 887 ist ein Verfahren zur Herstellung von Mikrokapseln bekannt, bei dem ein hydrophobes Material mit einer Hülle aus Melamin-Formaldehyd-Kondensaten versehen wird. Bei diesem Verfahren entstehen Teilchen aus Hülle und Kern, wohingegen beim erfindungsgemäßen Verfahren massive einheitliche Teilchen hergestellt werden.

In der DD-A-224 602 wird ein Verfahren zur Herstellung monodisperser Latices von Melamin-Formaldehyd-Harzen mit Teilchengrößen im Bereich von 0,1 bis 15 $\mu$m durch Polykondensation von Melamin und Formaldehyd in wäßrigem Medium beschrieben. Hierbei werden Methylolmelamine mit im Mittel 1,5 Methylolgruppen pro Melamin in einer wäßrigen Lösung/Suspension bei einer Konzentration von 5 bis 70 g Methylolmelamin je Liter bei 70 bis 100°C und bei einem pH zwischen 3,5 und 6,5 kondensiert. Dabei kann - um für spätere Anwendungen besonders geeignete Dispersionen zu erhalten - die Oberfläche der Teilchen während oder nach der Kondensation durch Zugabe von kondensationsfähigen Verbindungen modifiziert und/oder durch Zusatz von Farbstoffen, insbesondere von Fluoreszenzfarbstoffen markiert werden. Als Modifizierungsmittel werden Amino-, Carboxyl-, Sulfonsäure- oder Phosphonsäuregruppen enthaltende kondensationsfähige Verbindungen genannt.

Das Verfahren der DD-A-224 602 ist eine Weiterentwicklung der aus den SU-A-441 272 und 933 666 bekannten Verfahren. In den SU-A wird erstmals die Herstellung von monodispersen Polymerlatices (Latices s.o.) aus Melamin und Formaldehyd beschrieben. Hauptvorteil der Melamin-Formaldehyd-Harz-Dispersion ist nach den Angaben in den SU-A die Dichte der in der Dispersion enthaltenen Teilchen, die größer als 1 ist. Damit ergeben sich bei der Reinigung der Dispersionen beachtenswerte Vorteile (z.B. bei der Sedimentation). Nachteilig sind bei den nach den SU-A erhaltenen Produkten die geringe Stabilität der Dispersion, die relativ starke Abhängigkeit der Teilchengrößenverteilung von der Qualität des verwendeten Melamins und insbesondere von der des Formaldehyds. Ein weiterer Nachteil des Verfahrens der SU-A ist, daß sich keine oder nur sehr schwierig reproduzierbare Teilchengrößen herstellen lassen. Das Verfahren gemäß der DD-A-224 602 will diese Schwierigkeit durch Verwendung von im alkalischen Bereich vorkondensierten Methylolmelamin bei der Herstellung der Dispersion im sauren pH-Bereich umgehen. Die so hergestellten Dispersionen sollen nach den Angaben in der DD-A stabiler sein. Die bekannten Verfahren haben für eine technische Herstellung und Anwendung noch viele Nachteile und Schwierigkeiten und lassen dementsprechend viele Wünsche offen.

Die Konzentration der nach den Verfahren des Standes der Technik erhältlichen Dispersionen ist mit effektiv 4 bis 8 Gew.-% im Hinblick auf die Raum-Zeit-Ausbeute gering.

Bei den 3 vorstehend genannten Verfahren müssen die anfallenden Dispersionen erst in aufwendigen Fraktionierungsschritten von Oligomeren und gegebenenfalls auch von Formaldehyd befreit werden. Erst dann erhält man die gewünschten monodispersen Dispersionen.

Aufgabe der Erfindung war es, ein technisch einfach zu handhabendes Verfahren zur Herstellung von kugeligen, harten, massiven Teilchen auf der Basis von Melamin und Formaldehyd bereitzustellen. Diese Aufgabe wird mit Hilfe des Verfahrens der Erfindung gelöst.

Die Erfindung betrifft ein Verfahren zur Herstellung von kugelförmigen, harten mono- oder oligodispersen Teilchen, die Durchmesser von 0,1 bis 100 $\mu$m aufweisen, durch Kondensation von Melamin und Formaldehyd in wäßrigem Medium bei pH 3 bis 6, dadurch gekennzeichnet, daß kein zu verkapselndes hydrophobes Material vorhanden ist und daß man

a) in einer wäßrigen Lösung eines in Wasser löslichen Polymeren, das stark saure Gruppen trägt und das einen K-Wert nach Fikentscher von 100 bis 160 oder eine Viskosität von 200 bis 3000 mPa$\bullet$s bei einem Schergefälle von 489 s$^{-1}$ (gemessen bei 25°C in 20 gew.-%iger wäßriger Lösung bei pH 7,0) aufweist,

b) ein mit $C_1$-$C_4$-Alkanolen partiell verethertes Melamin-Formaldehyd-Vorkondensat, das in Wasser in jedem Verhältnis klar löslich ist und das ein Verhältnis von Melamin zu Formaldehyd von 1 : 3 bis 1 : 6 mol aufweist,

c) bei 20 bis 100°C kondensiert,

d) die Dispersion neutralisiert, abkühlen läßt und

e) gegebenenfalls die Teilchen isoliert.

Nach dem erfindungsgemäßen Verfahren erhält man kugelförmige, harte Teilchen aus Melamin-Formaldehyd-Harzen, deren Durchmesser durch bestimmte Maßnahmen den Bereich von 0,1 bis 100 $\mu$m und größer überstreichen. Durch entsprechende Maßnahmen gelingt es, Teilchen mit mono-, oligo- oder polydispersen Teilchendurchmesserverteilungen herzustellen. Nach dem Verfahren der Erfindung lassen sich wäßrige Dispersionen mit Gehalten von 1 bis 40 Gew.-%, bevorzugt von 8 bis 30 Gew.-%, an Feststoff herstellen.

Die nach dem erfindungsgemäßen Verfahren hergestellten Dispersionen der feinen Teilchen weisen aufgrund ihrer Kugelgestalt, ihrer Härte, ihrer Nichtquellbarkeit und der Möglichkeit die Teilchengröße und Teilchengrößenverteilung gezielt einstellen zu können bei einer Reihe von Anwendungen gegenüber den bisherigen verwendeten Stoffen eine Reihe von Vorteilen auf.

Die nach dem Verfahren gemäß der Erfindung anfallenden Dispersionen sind sehr stabil und niederviskos. Die Dispersionen können, gegebenenfalls nach dem Umsetzen des bei der Kondensation des Melamin-Formaldehyd-Vorkondensates gebildeten freien Formaldehyds mit Melamin oder anderen Stoffen, die mit Formaldehyd reagieren, zu Pulvern getrocknet werden. Letztere sind zur Herstellung sehr niederviskoser wäßriger oder nichtwäßriger Dispersionen geeignet.

Die Verfahrensprodukte können in Form der Dispersion oder in Form von Pulvern für die verschiedensten Zwecke verwendet werden: z.B.

i) als "rollende Schlichte z.B. in Strangziehverfahren zur Herstellung von Kunststoff-, Textil- oder Glasfasern;

ii) als Polier- und/oder Reinigungsmittel.

iii) als Eichlatices für die Eichung von optischen und elektronischen Teilchengrößenbestimmungs- und Teilchenzählgeräten;

iv) als reaktive Matrix für Verfahren der biologischen und medizinischen Diagnostik;

v) als Mattierungsmittel, Extender für Pigmente und als Pigment, das gegebenenfalls mit den Bindemittelharzen reagieren kann.

Für das Verfahren gemäß der Erfindung ist wesentlich:

1) daß ein Melamin-Formaldehyd-Vorkondensat als Ausgangsstoff verwendet wird, das mit Wasser in jedem Verhältnis ohne Trübung mischbar ist.

Diese Vorkondensate werden durch Kondensation von Melamin mit Formaldehyd im Molverhältnis 1 : 3 bis 1 : 6 und folgender partieller Veretherung mit $C_1$-$C_4$-Alkanolen, vorzugsweise Methanol erhalten und

2) daß die Bildung der Teilchen in der Lösung eines klar gelösten, stark saure Gruppen, vorzugsweise Sulfonsäuregruppen tragenden Polymeren erfolgt. Die Konzentration des gelösten Polymeren beträgt, bezogen auf die Lösung aus dem Polymeren und dem Vorkondensat, 1 bis 10, vorzugsweise 2 bis 5 Gew.% an den stark saure Gruppen enthaltenden Polymeren.

Die Polymeren müssen einen K-Wert nach Fikentscher von 100 bis 160 (gemessen in wäßriger Lösung) oder eine Viskosität von 200 bis 3000 mPa•s bei einem Schergefälle von 489 $s^{-1}$ (gemessen bei 25°C in 20 %iger wäßriger Lösung bei pH 7,0) aufweisen. Bevorzugt sind Polymere mit einem K-Wert von 100 bis 140 oder deren Viskosität 400 bis 2000 mPa•s beträgt. Dabei wurde gefunden: je höher das Molekulargewicht der Polymeren, umso kleiner werden bei dem Verfahren die Teilchen. Als wasserlösliche stark saure Gruppen tragende Polymere kommen vor allem die Sulfonsäuregruppen tragenden Polymeren in Betracht, z.B. Polymerisate des Sulfoethyl(meth)acrylats, des Sulfopropyl(meth)acrylats, der Vinylsulfonsäure, der Maleinimid-N-ethansulfonsäure, der 2-Acrylamido-2-methylpropansulfonsäure und zwar sowohl in Form der Homopolymerisate als auch in Form der Copolymerisate. Die Polymeren liegen in Form der freien Säure oder vorzugsweise in Form der Alkalimetallsalze oder von Salzen tertiärer Amine vor. Als Sulfonsäuregruppen tragende Polymere kommen außerdem Copolymere in Betracht, die aus den genannten Sulfogruppen tragenden Monomeren und $C_1$-$C_3$-Alkylacrylaten, Hydroxy-$C_2$-$C_4$-alkylacrylaten wie Methyl-, Ethyl-, n- oder i-Propylacrylat, Hydroxypropylacrylat und/oder N-Vinylpyrrolidon, Acrylnitril, Acrylsäure, aufgebaut sind. Im Falle der Acrylate beträgt deren Anteil am Copolymerisat maximal 35 Gew.-%. Im Falle der Mitverwendung von Hydroxyalkylacrylaten, bzw. von Acrylsäure und oder Acrylnitril sollte deren Anteil nicht größer als 10 Gew.-%, bzw. 35 Gew.-%, bezogen auf die Summe der Comonomeren, sein. Bei Copolymeren mit N-Vinylpyrrolidon liegt der Anteil an den Sulfonsäuregruppen tragenden Monomeren bei mindestens 5, vorzugsweise bei 30 Gew.-% und darüber (bezogen auf die Summe der Comonomeren). Von den Copolymerisaten sind solche bevorzugt, die 2-Acrylamido-2-methyl-propansulfonsäure als Sulfonsäuregruppen tragendes Comonomere enthalten. Als Polymere sind die der 2-Acrylamido-2-methylpropansulfonsäure besonders bevorzugt, da in Lösungen dieses Polymeren besonders niedrig viskose Dispersionen und Teilchen mit besonders guten Eigenschaften gebildet werden.

3

Das Verhältnis Melamin-Formaldehydvorkondensat zu dem wasserlöslichen, saure Gruppen tragenden Polymeren beträgt 1 : 0,05 bis 1 : 0,7, bevorzugt 1 : 0,1 bis 1 : 0,4 Gew.-Tl., bezogen auf den Feststoffgehalt.

Durch Anwendung entsprechend konzentrierter Lösungen des Melamin-Formaldehyd-Vorkondensates können nach dem vorliegenden Verfahren Dispersionen mit Feststoffgehalten von 1 bis 40 Gew.-%, vorzugsweise von 8 bis 30 Gew.-%, hergestellt werden. Dabei wurde gefunden, daß mit zunehmender Konzentration des Vorkondensates in der Regel der Durchmesser der Teilchen ansteigt.

Die Kondensation des Vorkondensates erfolgt bei Temperaturen von 20 bis 100 ° C, bevorzugt bei 25 bis 80 ° C. Die Kondensation kann bei konstanter Temperatur aber auch bei variabler Temperatur, z.B. bei steigender Temperatur erfolgen.

Die Kondensation des Melamin-Formaldehyd-Vorkondensates erfolgt bei pH 3,0 bis 6,0, bevorzugt bei pH 3,5 bis 5,0. Der pH-Wert in der wäßrigen Lösung kann mit verschiedenen Säuren eingestellt werden, z.B. mit Salzsäure, Schwefelsäure, Phosphorsäure, p-Toluolsulfonsäure, Carbonsäuren wie Ameisensäure, Essigsäure oder Propionsäure. Bei Verwendung der Carbonsäuren wurde gefunden, daß die Kondensation bei gleichem pH-Wert von der Ameisensäure zur Propionsäure schneller erfolgt. Gleichzeitig nimmt der Durchmesser der Teilchen ab.

Die Kondensation bis zum Aufbrauch des in Lösung enthaltenen Melamin-Formaldehyd-Vorkondensates erfolgt mit zunehmendem Teilchendurchmesser und/oder steigendem pH-Wert deutlich langsamer. Das Ende der Kondensation läßt sich an einer Probe durch Ansäuern auf pH-Werte unter 3,5 und Weiterkondensation prüfen. Dispersionen, die noch etwa 10 Gew.% und mehr an dem Vorkondensat enthalten, zeigen dann eine zweite Fraktion sehr feiner im wesentlichen monodisperser Teilchen. Bei geringeren Gehalten hat es sich als vorteilhaft erwiesen, zur Beschleunigung der Restkondensation den pH-Wert auf bis zu 2 zustellen und/oder die Temperatur auf 60 bis 100 ° C anzuheben.

Im pH-Bereich von 3,5 bis ca. 4,5 erhält man Teilchen mit monodisperser Verteilung des Durchmessers, wobei der Teilchendurchmesser mit steigendem pH-Wert zunimmt. Bei der Kondensation bei pH-Werten >4,5 erhält man Teilchen mit oligodisperser Durchmesserverteilung. Höhere Temperaturen zeigen Tendenz zu kleineren und mehr polydispers verteilten Teilchendurchmessern und umgekehrt. Da auch das in üblichem Wasser enthaltene Salz die Teilchengröße der bei der Kondensation entstehenden Teilchen beeinflußt, erfolgt die Kondensation zweckmäßigerweise in Lösungen mit vollentsalztem Wasser.

Fügt man einer solchen Lösung z.B. 0,1 Gew.-% und mehr Salz hinzu, so erhält man größere Teilchen. Gleichzeitig erhält man unter Bedingungen, bei denen sonst Teilchen mit monodisperser Durchmesserverteilung entstehen, im zunehmendem Maße Teilchen mit oligodisperser Verteilung. Der durch das Salz hervorgerufene Effekt wird mit zunehmender Kettenlänge der Carbonsäure geringer. Auf diese Weise gelingt es mit Propionsäure auch in Gegenwart von bis zu 0,1 Gew.-% Salz, Teilchen mit monodispersen Durchmesserverteilungen zu erhalten.

Durch Variation der oben genannten Einflußgrößen ist es möglich, Dispersionen von Teilchen mit dem gewünschten Durchmesser, Durchmesserverteilungen und Feststoffgehalten herzustellen.

Der bei der Kondensation der Melamin-Formaldehyd-Vorkondensate freiwerdende Formaldehyd kann gebunden werden, z.B. in bekannter Weise mit Ammoniak bei pH-Werten oberhalb 7 bis 8 oder z.B. mit Harnstoff, Ethylenharnstoff.

Besonders vorteilhaft ist bei den nach dem Verfahren der Erfindung erhaltenen Dispersionen, den freien Formaldehyd durch Kondensation mit Melamin zu binden.

Hierzu wird die noch von der Kondensation her saure Dispersion der Teilchen bei 60 bis 90 ° C, bevorzugt bei 70 bis 85 ° C, bei pH 4,0 bis 5,0 unter Rühren innerhalb 1 bis 2 Stunden mit einer Aufschlämmung von Melamin in Wasser (Verhältnis Melamin zu Wasser 1 : 2 bis 1 : 4) kontinuierlich versetzt, wobei man die Kondensation bis zum Verbrauch des freien Formaldehyds fortführt.

Bei der Kondensation der Melamin-Formaldehyd-Vorkondensate zur Dispersion ist gleichmäßiges Mischen wesentlich. Das Durchmischen sollte nicht turbulent sein und es sollten dabei auch keine Gasblasen entstehen oder in die wäßrige Phase eingerührt werden, da durch solche Gasblasen Agglomerate der feinen Teilchen oder größere Teilchen gebildet werden können.

Die nach dem Verfahren erhaltenen Dispersionen können getrocknet werden, z.B. in einem Sprühtrockner. Die dabei erhaltenen Pulver sind frei von Agglomeraten und lassen sich in Wasser und/oder Lösungsmittel enthaltenden Systemen einfach einarbeiten. Für die Isolierung durch Sprühtrocknung sind vor allem die vollständig von Vorkondensat befreiten Dispersionen geeignet.

Das Verfahren gemäß der Erfindung soll durch die folgenden Beispiele zusätzlich erläutert werden. Die Prozentangaben beziehen sich auf das Gewicht. PAMPS steht für Poly-2-acrylamido-2-methylpropansulfonsäure.

I. Meßverfahren

Nach den unter 1. und 2. angegebenen Verfahren wurden die Viskosität der verwendeten wasserlöslichen Polymere und die Durchmesser und die Größenverteilung der Teilchen bestimmt.

I.1. Bestimmung der Viskosität

Die Viskosität des wasserlöslichen, saure Gruppen enthaltenden Polymeren wurde in einer 20 gew.-%igen Lösung des Polymeren bei 25°C und pH 7 im ®Rheomat 30 bei einem Schergefälle von 489 s$^{-1}$ gemessen.
Der K-Wert wurde nach Fikentscher (Cellulosechemie 13 (1932) 58 ff), 1 gew.-%ig in Wasser bestimmt.

II.2. Teilchengrößenbestimmung

Die Durchmesser der Mikroteilchen wurden in der neutralen Dispersion nach dem Verdünnen mit Wasser unter dem Mikroskop abgeschätzt. Die genaue Bestimmung erfolgte mit dem Coulter-Counter. Zur Ermittlung der Teilchendurchmesser und Teilchendurchmesserverteilungen wurde das Ergebnis des Coulter-Counters als Zahl der Teilchen einer Fraktion gegen den zugehörigen Teilchendurchmesser mit Hilfe eines Rechenprogrammes als Kurve dargestellt, wobei das Maximum jeweils gleich 100 % gesetzt wird. Das Maximum ergibt den häufigsten Teilchendurchmesser $\phi_n$ (Zahlenmittel). Mit Hilfe des Rechenprogrammes wurde zusätzlich eine Kurve gezeichnet, bei der das Produkt aus der Zahl der Teilchen, und der 3ten Potenz des zugehörigen mittleren Teilchendurchmessers der Fraktion gegen den mittleren Teilchendurchmesser aufgetragen ist. Das Maximum (= 100 %) dieser Kurve ergibt den Durchmesser des häufigsten Volumens der Mikroteilchen $\phi_{Vol}$. Bei monodisperser Verteilung der Teilchen sind die Werte $\phi_n$ und $\phi_{Vol}$ gleich. Aus den aufgezeichneten Kurven geht die Verteilung der Durchmesser der Mikroteilchen hervor. Bei monodisperser Verteilung enthält die Kurve einen ganz steilen Peak, bei oligodisperser Verteilung treten mehrere Peaks auf. Um bei einer breiteren Verteilungskurve eine Aussage über die Verteilungsbreite zu erhalten, wurde die Breite der Kurve (Halbwertsbreite -HW-) bei 50 % und 90 % der maximalen Kurvenhöhe gemessen und durch den häufigsten Durchmesser $\phi_n$ geteilt. Hieraus erhält man Angaben über die Verteilungsbreite Q = HW/$\phi$. Zur Charakterisierung der Teilchen werden Zahlenwerte für $Q_{50\ n}$, $Q_{50\ Vol}$ und $Q_{90\ n}$, $Q_{90\ Vol}$ angegeben.

II. Ausführungsbeispiele

Beispiel 1

In einem zylindrischen 2 l Glaskolben mit Propellerrührer wurden 1020 g vollentsalztes Wasser, 160 g einer 20 %igen, wäßrigen Lösung von Poly-2-acrylamido-2-methylpropansulfonsäure/Natriumsalz (Viskosität: 407 mPa•s, K-Wert: 106,6) und 72,8 g einer 10 %igen Ameisensäure durchmischt im Wasserbad auf 60°C aufgeheizt. Dann wurden unter Rühren (500 Upm) 172 g einer klaren, 70 % wäßrigen Lösung eines partiell methylierten Vorkondensates (aus 1 mol Melamin und 5,25 mol Formaldehyd, enthält 2,3 $CH_3O$-Gruppen pro Melaminmolekül) auf einmal zugegeben. Die Lösung hatte unmittelbar nach der Zugabe einen pH-Wert von 3,62. Die klare, wäßrige Lösung wurde bei 60°C gerührt. Nach ca. 3 min trübte sich die Lösung durch Ausfallen der Kondensatteilchen. Die gebildete Suspension mit den Melaminharzteilchen wurde 2 h bei 60°C weitergerührt, wobei die Teilchen unter Verbrauch des Vorkondensats auskondensierten. Die Trübung näherte sich dabei asymptotisch dem Entdwert. Die Suspension mit einem pH-Wert von 3,96 wurde mit Triethanolamin auf pH = 7,5 gestellt (Verbrauch: 14 g) und abgekühlt. Nach der Betrachtung durch das Mikroskop enthielt die 7 %ige Dispersion kugelige Einzelteilchen mit einem geschätzten Durchmesser von weniger als 1 $\mu$m. Die Messung mit dem Coulter-Counter ergab einen Durchmesser von $\phi_n$ = 1,44 $\mu$m (Zahlenmittel) bzw. $\phi_{Vol}$ = 1,48 $\mu$m bei einer Durchmesserverteilung von $\phi_{Vol\ 50}$ = 0,30 (HW$_{50}$/$\phi_{Vol}$) und $Q_{Vol\ 90}$ = 0,66; d.h. die in der Dispersion enthaltenen Teilchen wiesen eine relativ enge, fast monodisperse Durchmesserverteilung auf.

Beispiel 2

Es wurde genau wie in Beispiel 1 verfahren, jedoch wurden anstelle von 72,8 g nur 17,9 g 10 %ige Ameisensäure hinzugefügt. In der Lösung stellte sich unmittelbar nach der Zugabe des Melamin-Formaldehyd-Vorkondensates ein pH von 4,07 ein. Nach 7 min begann sich die Lösung zu trüben. Die Dispersion wurde danach 3 Stunden ausgehärtet, wobei nach 1 Stunde die Temperatur in 30 min auf 80°C erhöht wurde. Die Dispersion (pH = 4,34) wurde mit 7 g Triethanolamin neutralisiert und abgekühlt. Unter dem Mikroskop wurden gleichgroße, d.h. monodisperse, kugelige Teilchen mit einem geschätzten Durchmesser von 2 bis 3 $\mu$m gefunden. Die Messung mit dem Coulter-Counter ergab einen Durchmesser $\phi_n$ von 3,14 $\mu$m bzw. $\phi_{Vol}$ von 3,13 $\mu$m, bei einer Durchmesserverteilung von $Q_{n\ 50}$ = 0,0446 und $\phi_{Vol\ 50}$ = 0,083 bzw. $Q_{n\ 90}$ = 0,287 und $Q_{Vol\ 90}$ = 0,32. D. h. die Teilchen zeigen eine sehr enge, fast monodisperse Verteilung des Durchmessers bei im Vergleich zu Beispiel 1 größerem Teilchendurchmesser. Die Kurve der Teilchendurchmesser zeigt einen steilen Peak.

Beispiel 3

3.1 Herstellung der Dispersion.

Es wurde genau wie im Beispiel 1 verfahren, jedoch wurden statt 72,8 g nur 4,73 g 10 %ige Ameisensäure zugegeben. Unmittelbar nach der Zugabe des Melaminvorkondensates stellte sich ein pH von 4,53 ein. Die klare Ausgangslösung trübte sich nach 17 min. Die Suspension wurde 5 Std. auskondensiert, wobei nach 2 Std. die Temperatur im Verlauf von 1,5 Std. von 60°C auf 80°C erhöht wurde. Am Ende der Kondensation pH = 5 wurde mit 2,2 g Triethanolamin neutralisiert und abgekühlt. Unter dem Mikroskop erkennt man kugelige Einzelteilchen mit unterschiedlichen Durchmessern im Bereich von 2 bis 10 $\mu$m. Mit dem Coulter-Counter wurde als häufigster Teilchendurchmesser $\phi_n$ = 7,63 $\mu$m und $\phi_{Vol}$ = 9,31 $\mu$m bestimmt. Verteilungsbreite: $Q_{n\ 50}$ = 0,595; $Q_{Vol\ 50}$ = 0,50; $Q_{Vol\ 90}$ = 1,31. Die Durchmesserverteilungskurve zeigte einen weiteren Peak bei $\phi_n$ = 8,81 $\mu$m; d.h. die Teilchen hatten eine bidisperse bzw. bimodale Verteilung. Nach der Kurve hatten 50 % der Teilchen einen Durchmesser von $Q_n$ = 5 bis 10 $\mu$m, 90 % der Teilchen bis 14 $\mu$m, die restlichen 10 % einen Durchmesser von 14 bis 20 $\mu$m. Eine Probe der Dispersion wurde mit verdünnter Schwefelsäure auf pH 2,0 gestellt und 2 Std. bei 60°C gerührt. Es ergab sich keine Änderung in der Verteilung der Teilchendurchmesser, d.h. die Suspension ist auskondensiert.

3.2 Isolierung der Teilchen.

500 g der nach 3.1 erhaltenen Dispersion wurden in einem Laborsprühtrockner mit Zweistoffdüse bei einer Eingangstemperatur von 130°C verdüst. Die Dispersion wurde so zudosiert, daß am Trocknerausgang hinter dem Zyklon eine Temperatur von 65°C eingehalten wurde. Es wurde ein Pulver mit einem Feststoffgehalt von 98,5 % erhalten. Das Pulver war sehr locker, fast staubig. Der gläserne Sprüh- bzw. Trockenraum des Sprühtrockners zeigte keinen festhaftenden Belag. Eine Probe des Pulvers, in Wasser mit einem Schnellrührer dispergiert, liefert unter dem Mikroskop Einzelkugeln der gleichen Größe und Verteilung wie die der Ausgangsdispersion.

Vergleichsbeispiel 1

Es wurde genau wie im Beispiel 3.1 verfahren, jedoch wurden anstelle von 1020 g Wasser und 160 g der 20 %igen Lösung von Poly-2-acrylamido-2-methylpropansulfonsäure/Natriumsalz nur 1148 g vollentsalztes Wasser vorgelegt. Durch Zugaben von 6,70 g 10 %iger Ameisensäure wurde der pH-Wert in der Lösung wie in Beispiel 3.1 auf 4,53 gestellt. Die klare Lösung trübt sich nach 10 min. Nach insgesamt 25 min koaguliert der Ansatz zu großen, gallertigen Brocken. Der Versuch wurde abgebrochen. Der Vergleichsversuch zeigt, daß in vorliegender Konzentration von ca. 7 % ohne das wasserlösliche Polymere keine stabile Dispersion entsteht und somit keine feinen Teilchen gewonnen werden können.

Beispiel 4

Es wurde genau wie im Beispiel 3.1 gearbeitet, jedoch wurden anstelle von 160 g hier 320 g der 20 %igen wäßrigen Lösung des Poly-2-acrylamido-2-methylpropansulfonsäure/Natriumsalzes hinzugefügt. Mit 5,90 g 10 %iger Ameisensäure wurde der Ansatz auf pH 4,54 gestellt. Nach ca. 7,5 min trübte sich die klare Lösung und wurde 4 Std. bis zur konstanten maximalen Trübung und einem pH-Wert von 4,85 auskondensiert. Nach Neutralisation und Abkühlen wurden unter dem Mikroskop kugelige Einzelteilchen mit Durchmessern von 1 bis 15 $\mu$m, vereinzelt bis 25 $\mu$m gefunden. Nach dem Coulter-Counter hatten die Teilchen der Dispersion einen häufigsten mittleren Durchmesser von $\phi_n$ = 4,17 $\mu$m, daneben existieren noch Peaks bei 7,27 $\mu$m und 24,3 $\mu$m. Aus der Kurve von $\phi_{Vol}$ ergeben sich häufigste Durchmesser durch entsprechende Peaks bei 7,56 $\mu$m, 9,5 $\mu$m und 24,3 $\mu$m; d.h. die Dispension hatte eine oligodisperse Verteilung.

Beispiel 5

Es wurde wie im Beispiel 1 gearbeitet, jedoch wurde die Ameisensäure durch 40 g 100 %ige Essigsäure ersetzt. Der pH-Wert in der Lösung ist 3,64 und steigt bei der Kondensation auf pH 4.1 an. Nach dem Neutralisieren und Abkühlen wurde eine Dispersion erhalten, die nach dem Aussehen unter dem Mikroskop aus kugeligen Einzelteilchen besteht mit einem Durchmesser von 1 bis 3 $\mu$m. Mit dem Coulter-Counter wurde ein häufigster mittlerer Durchmesser von $\phi_n$ = 1,48 $\mu$m bzw. $\phi_{Vol}$ = 1,63 $\mu$m bei einer Verteilung der Teilchendurchmesser von $Q_{n\,50}$ = 0,288 bzw. $Q_{Vol\,50}$ = 0,573 bestimmt.

Beispiel 6

Es wurde wie in Beispiel 1 gearbeitet, jedoch wurde die Lösung mit 11 g 100 %iger Essigsäure auf pH 4,00 gestellt. Nach Ausfallen der Teilchen wurde die Suspension 3 Std. auskondensiert (End-pH-Wert: 4,5), danach mit Triethanolamin neutralisiert und abgekühlt. Unter dem Mikroskop erkennt man kugelige gleichgroße Einzelteilchen mit einem geschätzten Durchmesser von 2 $\mu$m. Nach dem Coulter-Counter haben die Teilchen einen Durchmesser von $\phi_n$ = $\phi_{Vol}$ = 2,79 $\mu$m. Diese Identität ist ein Zeichen für eine enge Durchmesserverteilung, die mit $Q_{n\,50}$ zu 0,087 bzw. $Q_{n\,90}$ zu 0,299 bestimmt wurde. D.h. die Teilchen liegen praktisch in monodisperser Verteilung vor.

Beispiel 7

Es wurde wie im Beispiel 1 gearbeitet, jedoch wurde die Ameisensäure durch 27 g 10 %ige Essigsäure ersetzt. Der pH-Wert stellte sich unmittelbar nach dem Zusammengeben auf 4,38 ein. 9 min nach dem Zugeben der Säure trübte sich die klare Lösung; Dauer der Auskondensation: 3 Std. End-pH: 4,9. Nach dem Neutralisieren und Abkühlen wurde eine Dispersion erhalten, die unter dem Mikroskop kugelige Einzelteilchen mit einem Durchmesser von 4 bis 5 $\mu$m erkennen läßt. Nach der Messung mit dem Coulter-Counter lag der häufigste Durchmesser $\phi_n$ bei 4,60 bzw. $\phi_{Vol}$ bei 4,90 $\mu$m mit einer Verteilung der Durchmesser $Q_{Vol\,50}$ = 0,153.

Beispiel 8

Es wurde wie im Beispiel 1 gearbeitet, jedoch wurden anstelle der Ameisensäure 100 g 100 %ige Propionsäure zugegeben. Nach dem Durchmischen lag der pH-Wert bei 3,78. Die Auskondensation erfolgte in 3 Std. bei 60°C. End pH: 4,1. Nach dem Neutralisieren erkannte man unter dem Mikroskop etwa gleichgroße kugelige Einzelteilchen mit einem geschätzten Durchmesser von 2 $\mu$m. Nach dem Coulter-Counter war der häufigste Durchmesser $\phi$ = 1,5 und $\phi_{Vol}$ = 1,75 $\mu$m und die Verteilungsbreite $Q_{Vol\,50}$ = 0,48, d.h. eine relativ enge Verteilung.

Beispiel 9

Es wurde wie im Beispiel 8 gearbeitet, jedoch wurde der pH-Wert durch Zugabe von 25 g 100 %iger Propionsäure auf 4,08 gestellt. Die Dispersion wurde 2 Std. bei 60°C und 2 Std. bei 80°C ausgehärtet. End-pH: 4,47. Unter dem Mikroskop erkannte man, daß die Dispersion aus etwa gleichgroßen, kugeligen Einzelteilchen mit ca. 2 $\mu$m Durchmesser bestand. Die Analyse im Coulter-Counter lieferte einen häufigsten Durchmesser $\phi_n$ = 2,54 $\mu$m bzw. $\phi_{Vol}$ = 2,55 $\mu$m mit einem zusätzlichen Peak bei $\phi_n$ = 3,05 $\mu$m. Die enge Verteilung der Durchmesser wurde zu $Q_{n\,50}$ = 0,0980 bzw. $Q_{n\,90}$ = 0,442 bestimmt.

Beispiel 10

Es wurde wie im Beispiel 8 gearbeitet, jedoch wurde der pH-Wert mit 65 g 10 %iger Propionsäure auf 4,35 gestellt und die Dispersion 4 Std. bei 60°C ausgehärtet. Es wurde eine Dispersion mit kugeligen Einzelteilchen erhalten, die unter dem Mikroskop einen Durchmesser von ca. 3 $\mu$m haben. Mit dem Coulter-Counter wurde der häufigste Teilchendurchmesser zu $\phi_n$ = 3,70 bzw. $\phi_{Vol}$ = 3,76 $\mu$m mit einer sehr engen Verteilung $Q_{Vol\,50}$ = 0,169 und $Q_{Vol\,90}$ = 0,244 bestimmt; d.h. die Dispersion hat eine fast monodisperse Verteilung.

7

EP 0 415 273 B1

Beispiel 11

Es wurde wie in Beispiel 10 verfahren, jedoch wurden dem vollentsalzten Wasser 2,44 g Natriumsulfat zugesetzt. Die auskondensierte Dispersion zeigte unter dem Mikroskop kugelige, unterschiedlich große Einzelteilchen mit Durchmessern zwischen 3 und 10 $\mu$m. Die Messung mit dem Coulter-Counter ergibt einen häufigsten Durchmesser von $\phi_n$ = 5,55 $\mu$m bzw.
$\phi_{Vol}$ = 7,90 $\mu$m. Die Verteilungskurve lieferte in $\phi_n$ 3 ausgeprägte Peaks bei 2,94 $\mu$m, 5,55 $\mu$m und 7,90 $\mu$m, in $\phi_{Vol}$ solche bei 5,70 $\mu$m, 7,90 $\mu$m und 16,6 $\mu$m.

Beispiel 12

Es wurde wie in Beispiel 11 verfahren, jedoch wurden anstelle von Natriumsulfat 2,81 g Kalziumchlorid • $2H_2O$ zugegeben. Die fertige Dispersion zeigte unter dem Mikroskop kugelige, unterschiedlich große Einzelteilchen von einem geschätzten Durchmesser von 3 bis 12 $\mu$m. Nach der Messung mit dem Coulter-Counter ergab sich ein häufigster Durchmesser $\phi_n$ von 6,15 $\mu$m bzw. $\phi_{Vol}$ von 6,20 $\mu$m. Die Verteilungskurve zeigt ausgeprägte Peaks bei $\phi_n$ = 2,90; 6,15; 8,40 und 16,5 $\mu$m bzw. bei $\phi_{Vol}$ = 6,20; 8,40 und 16,5 $\mu$m. D. h. eine oligodisperse Verteilung der Teilchendurchmesser der kugeligen Einzelteilchen kann auch durch eine Salzzugabe erzielt werden.

Beispiele 13 und 14

Vergleichsbeispiel 2

Im Vergleichsbeispiel 2 und in den Beispielen 13 und 14 wird der Einfluß des Molekulargewichtes bzw. des K-Wertes des Poly-2-acrylamido-2-methylpropansulfonsäure/Natriumsalzes (PAMS-Na) auf die Ausbildung der kugeligen Einzelteilchen gezeigt. Es wurde genau wie im Beispiel 2 verfahren, jedoch wurden jeweils 160 g der 20 %igen Lösung des in der Tabelle 1 angegebenen Poly-2-acrylamido-2-methylpropansulfonsäure/Natriumsalzes (PAMPS-Na) angewendet.

Tabelle 1

| | PAMPS-Na (20 %ig) | | Teilchendurchmesser Mikroskop [$\mu$m] |
|---|---|---|---|
| | K-Wert | Viskosität [mPa•s] | |
| Beispiel 13 | 106,6 | 407 | 2-3, E; monodispers |
| Beispiel 14 | 123,4 | 806 | 1-2, E; monodispers |
| Vergleichsbeispiel 2 | 40 | - | Brocken, keine E*) $\phi$ 8 $\mu$m |

E*) Einzelteilchen

Aus der Tabelle ergibt sich, daß - je nach dem gewählten Verhältnis von wasserlöslichem Polymeren zu Vorkondensat und Wasser - ein Optimum bezüglich des Gehaltes an Einzelteilchen in einem bestimmten K-Wert bzw. Molekulargewichtsbereich das PAMPS-Na existiert, und daß der Teilchendurchmesser mit steigendem K-Wert bzw. Molekulargewicht des Polymeren fällt. Dies führt bei hohem Molekulargewicht zu einer Agglomeration der zu kleinen Teilchen. Der Bereich monodispers anfallender Teilchen kann durch Variation der Menge am Vorkondensat, Polymer und der Reaktionsparameter in Grenzen variiert werden.

Beispiel 15

In einem zylinderischen Glasgefäß (Volumen: 4 l, Innendurchmesser: 15,5 cm), in dem ein Zahnscheibenrührer, Scheibendurchmesser 5 cm, mit 2000 Upm rührt, wurden 1270 g entsalztes Wasser, 211 g einer 20 %igen wäßrigen Lösung von Poly-2-acrylamido-2-methylpropansulfonsäure/Natriumsalz (K-Wert = 123, Viskosität 805 mPa • s) und 46 g einer 9,84 %igen Ameisensäure auf 60 °C aufgeheizt und dann 229 g der Lösung des Melamin-Formaldehydvorkondensates aus Beispiel 1 zugefügt.
Dabei stellte sich der pH-Wert auf 4,0 ein. Trotz einiger Luftblasen, die durch das zu schnelle Rühren entstehen, besteht die Dispersion, nach 4 stündigem Auskondensieren, wobei die Temperatur langsam von 60 °C auf 85 °C erhöht wurde aus Einzelteilchen. End-PH-Wert: 4,47. Nach dem Neutralisieren mit 30 g Triethanolamin und Abkühlen erhält man eine Dispersion, die kugelige Einzelteilchen mit einem geschätzten Durchmesser von 1 bis 2 $\mu$m in monodisperser Verteilung enthält. Die Messung mit dem Coulter-Counter liefert einen häufigsten Durchmesser von $\phi_n$ = $\phi_{Vol}$ = 1,54 $\mu$m, bei einer Durchmesserverteilung von $Q_{n\,50}$ = 0,182 bzw. $Q_{n\,90}$ = 0,422. Der Feststoffgehalt der Dispersion beträgt 9,2 %

Beispiel 16

16.1 Herstellung

Es wurde wie in Beispiel 15 gearbeitet, anstelle von 211 g wurden jedoch 422 g der PAMPS-Na-Lösung und statt 229 g wurden 458 g der Lösung des Melamin-Formaldehyd-Vorkondensates vorgelegt. Durch Zugeben von 98 g 9,84 %iger Ameisensäure wurde der pH-Wert zu Beginn der Kondensation auf 4,0 eingestellt. Von der noch sauren Dispersion wurde nach 4 stündiger Kondensation eine kleine Probe entnommen und mit Triethanolamin neutralisiert. Feststoffgehalt: 16,5 %. Unter dem Mikroskop sieht man gleichgroße, kugelige Einzelteilchen mit einem geschätzten Durchmesser von 2 $\mu$m. Die Messung im Coulter-Counter ergab einen häufigsten Teilchendurchmesser von $\phi_n$ = 2,78 $\mu$m bzw. $\phi_{Vol}$ = 2,75 $\mu$m und eine Verteilung der Teilchendurchmesser von $Q_{n\,50}$ = $Q_{Vol\,50}$ = 0,0576, d.h. eine sehr enge Verteilung.

16.2 Isolierung

500 g der Dispersion aus 16.1 wurden neutralisiert und in einem Laborsprühtrockner mit Zweistoffdüse bei einer Eingangstemperatur von 130°C verdüst. Es wurde soviel Dispersion zugefahren, daß sich am Ausgang des Trockners hinter dem Zyklon eine Temperatur von 70°C einstellte. Es wurden 70 g eines sehr feinen Pulvers erhalten. Der Sprühraum des Labortrockners war sauber, d.h. er zeigte keinen festhaftenden Belag. Der Feststoffgehalt des Pulvers wurde zu 98 % bestimmt. Eine Probe des sehr lockeren Pulvers wird in etwas Wasser aufgenommen und mit einem schnellaufenden Rührer dispergiert. Unter dem Mikroskop liegen wieder Einzelteilchen vor mit einem gegenüber der Ausgangsdispersion unveränderten Durchmesser.

Beispiel 17

Die Hauptmenge der auskondensierten, noch sauren Dispersion aus Beispiel 16.1 (170 g) wurde auf 79°C aufgeheizt und bei dieser Temperatur mit einem Propellerrührer bei 500 Upm gerührt. Zur Entfernung des freien Formaldehydes wurde eine Aufschlämmung von 76 g Melamin in 213 g Wasser gleichmäßig in einer Stunde zugefahren und dann noch eine Stunde bei 79°C unter Rühren gehalten. Danach wurde mit Triethanolamin neutralisiert und abgekühlt. Die so erhaltene Dispersion hat einen Feststoffgehalt von 20,8 % und riecht praktisch nicht mehr nach Formaldehyd. Unter dem Mikroskop sieht man kugelige, gleichgroße Einzelteilchen von etwa 2 bis 3 $\mu$m. Die Messung auf dem Coulter-Counter zeigte gegenüber dem Beispiel 16.1 eine kaum veränderte Teilchengröße: $\phi_n$ = 2,78 $\mu$m bzw. $\phi_{Vol}$ = 2,80 $\mu$m mit einer Verteilung der Teilchengrößen von $Q_{n\,50}$ = 0,0683 bzw. $Q_{Vol\,50}$ = 0,0685.

Beispiel 18

In einem zylindrischen 2 l Glasgefäß mit Propellerrührer, der sich mit 500 Upm drehte, wurden 1020 g entsalztes Wasser, mit 160 g einer 20 %igen wäßrigen Lösung eines Poly-2-acrylamido-2-methylpropansulfonsäure/Natriumsalzes (K-Wert = 127,4, Viskosität 827 mPa•s) und 135 g einer 70 %igen, wäßrigen Lösung eines mit Wasser ohne Trübung unendlich verdünnbaren Vorkondensates aus 1 mol Melamin und 2,9 mol Formaldehyd, das partiell mit 2,4 $CH_3O$-Gruppen je Melaminmolekül verethert ist, gemischt und auf 38°C aufgeheizt. Dann wurden 78 g einer 10 %igen wäßrigen Propionsäurelösung zugegeben. Es stellte sich ein pH-wert von 4,50 ein und die Kondensation der noch klaren Lösung setzte ein. Nach 20 min trübte sich die Lösung. Die Suspension wurde 4 Std. bei 38 bis 40°C und nach dem Aufheizen eine Stunde bei 70°C auskondensiert. Die erhaltene Dispersion wurde mit Triethanolamin neutralisiert und abgekühlt. Feststoffgehalt: 9,0 %. Mit dem Mikroskop erkennt man gleichgroße, kugelige Einzelteilchen von schätzungsweise 2 bis 3 $\mu$m. Mit dem Coulter-Counter wurde ein häufigster Durchmesser von $\phi_n$ = 2,58 bzw. $\phi_{Vol}$ = 2,60 gemessen. Bei einer Verteilung der Durchmesser von $Q_{n\,50}$ = 0,143 bzw. $Q_{Vol\,90}$ = 0,526 wurde eine enge Verteilung angezeigt.

Beispiel 19

Es wurde wie in Beispiel 18 verfahren, jedoch folgende Abänderungen durchgeführt:

a) der Blattrührer drehte sich mit 25 Upm;

b) anstelle von Propionsäure wurden 12 g 10 %ige Ameisensäure zugegeben pH = 4,80.

Die Temperatur wurde bei 38 bis 40°C gehalten. Nach der Auskondensation wurde eine 13,7 % Feststoff enthaltende Dispersion erhalten, die nach der Betrachtung durchs Mikroskop kugelige Einzelteilchen mit einem Durchmesser von etwa 6 bis 7 $\mu$m enthielt. Die Messung mit dem Coulter-Counter ergab einen häufigsten Teilchendurchmesser von $\phi_n$ = 10,42 $\mu$m bzw. $\phi_{Vol}$ = 10,66 $\mu$m. Daneben wurde noch ein kleinerer Peak bei $\phi_n$ = 7,4 $\mu$m bzw. $\phi_{Vol}$ = 7,67 $\mu$m und ein noch kleinerer Peak bei $\phi_n$ = 5,07 $\mu$m gefunden. Es lag also eine oligodisperse Verteilung vor. Die Verteilung der Durchmesser wurde zu $Q_{n\,50}$ = 0,184 bzw. $Q_{Vol\,50}$ = 0,257 bestimmt.

Beispiel 20

Es wurde wie in Beispiel 1 gearbeitet. Im Rührgefäß wurden 1270 g entsalztes Wasser, 200 g der wäßrigen Lösung aus Poly-2-acrylamido-2-methylpropansulfonsäure/Natriumsalz und 340 g der Lösung des partiell methylierten Vorkondensates aus Melamin und Formaldehyd vorgelegt, das Gemisch mit 800 Upm gemischt und auf 44°C aufgeheizt. Dann wurde das Gemisch mit 6 %iger Ameisensäure auf pH 4,2 gestellt. Nach und nach wurde weitere Ameisensäure zugegeben, so daß der pH-Wert über 2 Std. bei 4,2 gehalten wurde. Insgesamt wurden 120 g 6 %ige Ameisensäure benötigt. Danach wurde die Temperatur der Mischung von 44°C innerhalb einer halben Std. auf 80°C erhöht und 1,5 Std. bei 80°C gehalten. Die Dispersion war darauf auskondensiert. Nach dem Abkühlen wurde mit 10 %iger Natronlauge auf pH = 7,8 gestellt. Unter dem Mikroskop betrachtet, besteht die Dispersion aus gleichgroßen, kugeligen Einzelteilchen mit einem Durchmesser von 11 $\mu$m. Die Dispersion wurde im Sprühtrockner bei einer Eingangstemperatur von 125°C und einer Ausgangstemperatur von 65°C getrocknet. Dabei werden die Mikroteilchen als staubendes Pulver erhalten.

Beispiel 21

In einem zylindrischen 5 l Glaskolben mit Propellerrührer wurden 2540 g vollentsalztes Wasser, 500 g einer 20 %igen, wäßrigen Lösung von Poly-2-acrylamido-2-methylpropansulfonsäure/Natriumsalz (Viskosität: 407 mPa•s, K-Wert: 106,6) und 120 g einer 10 %igen Ameisensäure durchmischt im Wasserbad auf 47°C aufgeheizt. Dann wurden unter Rühren (500 Upm) 640 g einer klaren, 70 % wäßrigen Lösung eines partiell methylierten Vorkondensates (aus 1 mol Melamin und 5,25 mol Formaldehyd, enthält 2,3 $CH_3O$-Gruppen pro Melaminmolekül) auf einmal zugegeben. Die Lösung hatte unmittelbar nach der Zugabe einen pH-Wert von 4,2. Die klare, wäßrige Lösung wurde bei 47 bis 50°C gerührt. Der pH-Wert wurde durch langsame Zugabe von insgesamt 60 g 6%iger Ameisensäure bei 4,2 konstant gehalten. 2 1/4 Std. nach dem Zugeben des Vorkondensates wurde die Temperatur in der inzwischen entstandenen Suspension in 30 Min. auf 60°C angehoben und bei 60° auskondensiert (Dauer: 1 1/2 Std.). Die Suspension wurde mit 10%iger Natronlauge neutralisiert und auf Raumtemperatur abkühlen gelassen.

Die Suspension hatte einen Feststoffgehalt von 7,7 %. Unter dem Mikroskop sieht man kugelige Einzelteilchen mit Durchmesser von 3 bis 30 $\mu$m, am häufigsten Teilchen mit 15 $\mu$m Durchmesser.

3800 g der erhaltenen Suspension wurden entsprechend Beispiel 16 im Laborsprühtrockner bei einer Gaseingangstemperatur von 125°C und einer Gasausgangstemperatur von 77°C getrocknet. Ausbeute: 270 g eines staubenden Pulvers. Das erhaltene Pulver läßt sich im Wasser in eine Dispersion überführen, die nur Einzelteilchen mit unveränderter Verteilung der Durchmesser enthält.

Anwendungsbeispiel 1

In einem 2 l-Mischbehälter aus Edelstahl wurden 1400 g Schleiföl, das aus 8,0 % Olein, 5,7 % Ammoniak (25 %), 5,8 % Spiritus (96 %), 5,8 % Mineralöl, 57,5 % Wasser und 17,3 % Neuenburger Meiselkreide besteht, mit 140 g eines oligodispersen Kunststoffteilchenpulvers vom mittleren Durchmesser von 4 bis 10 $\mu$m versetzt (Beispiel 11, die Kapseln wurden wie in Beispiel 3.2 getrocknet) und das Gemisch auf einem Disperser homogenisiert.

Die so erhaltene Schleif- und Polierpaste wird auf die zu glättende Oberfläche eines PE-Formteils mit ca. 20 g/m$^2$ aufgebracht und mit Hand in üblicher Weise unter leichtem Druck mit einem Textilballen verrieben. Nach ca. 10 min ist eine glatte, glänzende Oberfläche entstanden.

Anwendungsbeispiel 2

140 g einer Lanolincreme (auf der Basis von Glycerin, Wasser, Borsäure, Erdnußöl und Wollfett) wurden mit 28 g pulveriger formaldehydfreier Mikrokugeln mit einer Durchmesserverteilung von 4 bis 10 μm versetzt (Beispiel 11) und gemischt. Die erhaltene Paste wurde auf eine Hautpartie mit verhornter Haut gebracht und tüchtig verrieben. Nach kurzer Zeit lösten sich die verhornten Zellschichten ab, und es blieb eine glatte, zarte Hautpartie zurück.

Anwendungsbeispiel 3

250 g monodisperser Kunststoffteilchen mit ca. 5 μm Kugeldurchmesser (aus Beispiel 7) wurden in 1000 g eines Fotopapierlacks gegeben und 20 min mit Hilfe eines Propellerrührwerks gemischt. Dieser Lack wurde in einer Menge von 5 g/m² (Feststoff) auf eine Fotopapierunterlage aufgebracht und mit Elektronenstrahlen gehärtet. Die Lackschicht war samtartig matt. Bringt man auf die Lackierung Wasser, so war die Lackschicht nach 30 min noch unverändert, d.h. Wasser wurde von der Mattierung nicht aufgenommen.

Verfährt man wie oben angegeben, verwendet jedoch anstelle der monodispersen Teilchen 250 g kalibrierte Stärke (Durchm: 25 μm), dann erhält man nach dem Trocknen ebenfalls eine matte Lackschicht. Bringt man auf diese Lackschicht Wasser, dann ist der Film bereits nach 30 min angequollen und trüb und dadurch kratzempfindlich geworden.

## Patentansprüche

1. Verfahren zur Herstellung von kugelförmigen, harten mono- oder oligodispersen Teilchen, die Durchmesser von 0,1 bis 100 μm aufweisen (gemessen gemäß den Angaben der Beschreibung auf den Seiten 7/8), durch Kondensation von Melamin und Formaldehyd in wäßrigem Medium bei pH 3 bis 6, dadurch gekennzeichnet, daß kein zu verkapselndes hydrophobes Material vorhanden ist und daß man
   a) in einer wäßrigen Lösung eines in Wasser löslichen Polymeren, das stark saure Gruppen trägt und das einen K-Wert nach Fikentscher von 100 bis 160 oder eine Viskosität von 200 bis 3000 mPa s bei einem Schergefälle von 489 s⁻¹ (gemessen bei 25°C in 20 gew.-%iger wäßriger Lösung bei pH 7,0) aufweist,
   b) ein mit $C_1$-$C_4$-Alkanolen partiell verethertes Melamin-Formaldehyd-Vorkondensat, das in Wasser in jedem Verhältnis klar löslich ist und das ein Verhältnis von Melamin zu Formaldehyd von 1 : 3 bis 1 : 6 Mol aufweist,
   c) bei 20 bis 100°C kondensiert,
   d) die Dispersion neutralisiert, abkühlen läßt und
   e) gegebenenfalls die Teilchen isoliert.

2. Verfahren nach Anspruch 1, dadurch gekennzeichnet, daß man den in der wäßrigen Dispersion enthaltenen Formaldehyd bei pH 3 bis 6 und bei Temperaturen von 60 bis 100°C durch Reaktion mit in Wasser suspendiertem Melamin entfernt.

3. Verfahren nach Anspruch 1 oder 2, dadurch gekennzeichnet, daß die wäßrige Lösung ein Sulfonsäure Gruppen tragendes Polymer enthält.

4. Verfahren nach Anspruch 3, dadurch gekennzeichnet, daß die wäßrige Lösung ein Homo- oder Copolymerisat der 2-Acrylamido-2-methylpropansulfonsäure enthält.

5. Verfahren nach Anspruch 1, 2, 3 oder 4, dadurch gekennzeichnet, daß die wäßrige Lösung - bezogen auf die Lösung - 1 bis 10 Gew.-% des stark saure Gruppen tragenden Polymeren enthält.

6. Verfahren nach Anspruch 1, 2, 3, 4 oder 5, dadurch gekennzeichnet, daß das Verhältnis von Polymeren zu Melamin-Formaldehyd-Vorkondensat 0,05 : 1 bis 0,7 : 1 beträgt.

## Claims

1. A process for the preparation of spherical, hard mono- or oligodisperse particles which have diameters of from 0.1 to 100 μm (measured as stated on pages 8 and 9 of the description), by condensation of melamine and formaldehyde in aqueous medium at pH 3 to 6, wherein no hydrophobic material to be encapsulated is present and which comprises condensing

a) in an aqueous solution of a water-soluble polymer which has strongly acid groups and a Fikentscher K value of from 100 to 160 or a viscosity of from 200 to 3000 mPa s at a shear rate of 489 s$^{-1}$ (measured at 25°C in 20% by weight aqueous solution at pH 7.0),

b) a melamine-formaldehyde precondensate which is partially etherified with $C_1$-$C_4$-alkanols, forms a clear solution in water in every ratio and has a melamine to formaldehyde molar ratio of from 1 : 3 to 1 : 6,

c) at from 20 to 100°C,

d) neutralizing the dispersion and allowing it to cool and

e) isolating the particles if required.

2. A process as claimed in claim 1, wherein the formaldehyde present in the aqueous dispersion is removed by reaction with melamine suspended in water at pH 3 to 6 and at from 60 to 100°C.

3. A process as claimed in claim 1 or 2, wherein the aqueous solution contains a polymer with sulfo groups.

4. A process as claimed in claim 3, wherein the aqueous solution contains a homo- or copolymer of 2-acrylamido-2-methylpropanesulfonic acid.

5. A process as claimed in claim 1, 2, 3 or 4, wherein the aqueous solution contains from 1 to 10% by weight, based on the solution, of the polymer with strongly acid groups.

6. A process as claimed in claim 1, 2, 4 or 5, wherein the ratio of polymer to melamine-formaldehyde precondensate is from 0.05 : 1 to 0.7 : 1.

**Revendications**

1. Procédé de préparation de particules sphériques dures mono- ou oligodispersées, de diamètres compris entre 0,1 et 100 $\mu$m (mesurés selon les indications de la description dans les pages 7/8), par condensation de mélamine et de formaldéhyde en milieu aqueux à pH compris entre 3 et 6, caractérise en ce qu'aucune matière hydrophobe devant être enrobée n'est présente et en ce que

a) l'on condense, dans une solution aqueuse d'un polymère soluble dans l'eau, qui porte des groupes acides forts et présente une valeur K selon Fikentscher comprise entre 100 et 160 ou une viscosité de 200 à 3000 mPas à un gradient de cisaillement de 489 s$^{-1}$ (mesuré à 25°C dans une solution aqueuse à 20% en poids et à pH 7,0),

b) un précondensat mélamine-formaldéhyde partiellement éthérifié avec des alcanols en $C_1$-$C_4$, qui est parfaitement soluble dans l'eau en toutes quantités et qui présente un rapport de mélamine au formaldéhyde compris entre 1:3 et 1:6 en moles,

c) à une température comprise entre 20 et 100°C,

d) en ce que l'on neutralise la dispersion, on la laisse refroidir et

e) l'on isole éventuellement les particules.

2. Procédé selon la revendication 1, caractérisé en ce que le formaldéhyde contenu dans la dispersion aqueuse est éliminé à pH compris entre 3 et 6 et à des températures comprises entre 60 et 100°C par réaction avec de la mélamine en suspension dans l'eau.

3. Procédé selon la revendication 1 ou 2, caractérisé en ce que la solution aqueuse contient un polymère portant des groupes acide sulfonique.

4. Procédé selon la revendication 3, caractérisé en ce que la solution aqueuse contient un homo- ou un copolymère de l'acide 2-acrylamido-2-méthylpropanesulfonique.

5. Procédé selon l'une quelconque des revendications 1 à 4, caractérisé en ce que la solution aqueuse contient, par rapport à la solution, 1 à 10% en poids du polymère portant des groupes acides forts.

6. Procédé selon l'une quelconque des revendications 1 à 5, caractérisé en ce que le rapport des polymères au précondensat mélamine-formaldéhyde est compris entre 0,05 : 1 et 0,7 : 1.